Europäisches Patentamt

European Patent Office

Office européen des brevets

(11) Veröffentlichungsnummer: **0 215 975**
**A1**

## (12) EUROPÄISCHE PATENTANMELDUNG

(21) Anmeldenummer: 85112180.6

(22) Anmeldetag: 25.09.85

(51) Int. Cl.⁴: **H04N 1/413** , G06F 15/68

(43) Veröffentlichungstag der Anmeldung:
01.04.87 Patentblatt 87/14

(84) Benannte Vertragsstaaten:
**AT BE CH DE FR GB IT LI LU NL SE**

(71) Anmelder: **MAURER ELECTRONICS GMBH**
**Nymphenburger Strasse 154**
**D-8000 München 19(DE)**

(72) Erfinder: **Maurer, Andreas**
**Nymphenburger Strasse 149**
**D-8000 München 19(DE)**

(74) Vertreter: **Patentanwälte TER MEER - MÜLLER**
**- STEINMEISTER**
**Mauerkircherstrasse 45**
**D-8000 München 80(DE)**

(54) Verfahren und Vorrichtung zur Speicherung und Wiedergabe graphischer Muster bzw. Unterschriften.

(57) Ein graphisches Muster (M) wird mit Hilfe einer Eingabeeinrichtung (1,6) in einen Bildspeicher (B,8) eingelesen und in diesem in Form von Musterdaten - (D), (D₀), (D'₀) zwischengespeichert. An Hand der zwischengespeicherten Musterdaten (D), (D₀), (D'₀) werden nur die Positionen von Randbildbereichen - (W₀, ..., W₁₅; W'₀, ..., W'₆) ermittelt und gespeichert, die unmittelbar am und entlang des gesamten Randes von jeweils zum Muster (M) gehörenden Musterstrukturen (M₁, M'₁) liegen. Zur Wiedergabe des Musters (M) werden die Positionen der Randbildbereiche (W₀, ..., W₁₅; W'₀, ..., W'₆) aufgerufen und die ihnen jeweils zugeordneten Musterstrukturen (M₁, M'₁) mit Daten ausgefüllt und abgebildet, die den Musterdaten (D₀, D'₀) der Musterstrukturen (M₁, M'₁) entsprechen.

Fig.1

## Verfahren und Vorrichtung zur Speicherung und Wiedergabe graphischer Muster bzw. Unterschriften

Die Erfindung betrifft eine Verfahren zur elektronischen Speicherung und Wiedergabe von graphischen Mustern, insbesondere von Schriftzügen, sowie eine Vorrichtung zur Durchführung des Verfahrens.

Zur Speicherung eines graphischen Musters bzw. einer Unterschrift ist bereits vorgeschlagen worden, das Muster mit Hilfe einer Eingabeeinrichtung in einem Bildspeicher in Form von Musterdaten zu speichern, die matrixförmig angeordneten Bildbereichen zugeordnet sind, und die mittels einer zentralen Steuereinrichtung aus dem Bildspeicher abgerufen und einer Wiedereingabeeinrichtung zugeführt werden können.

Bei der Speicherung der den matrixförmig angeordneten Bildbereichen zugeordneten Musterdaten wird jedoch relativ viel Speicherplatz benötigt, so daß der Bildspeicher eine große Speicherkapazität besitzen muß, wenn in ihm viele Muster bzw. Unterschriften gespeichert werden sollen.

Der Erfindung liegt die Aufgabe zugrunde, ein Verfahren zur elektronischen Speicherung und Wiedergabe von graphischen Mustern, insbesondere von Schriftzügen, zu schaffen, bei denen der pro graphisches Muster bzw. pro Schriftzug benötigte Speicherplatz erheblich vermindert ist. Ziel der Erfindung ist es ferner, eine hierfür geeignete Vorrichtung zu schaffen.

Die verfahrensseitige Lösung der gestellten Aufgabe ist im kennzeichnenden Teil des Patentanspruchs 1 angegeben. Vorrichtungsseitig ist die Aufgabe durch den kennzeichnenden Teil des Patentanspruchs 16 gelöst.

Das Verfahren nach der Erfindung zeichnet sich dadurch aus, daß zunächst die Musterdaten des Musters zwischengespeichert werden, anhand der zwischengespeicherten Musterdaten nur die Positionen von Randbildbereichen ermittelt und gespeichert werden, die unmittelbar am und entlang des gesamten Randes von jeweils zum Muster gehörenden Musterstrukturen liegen, und daß zur Wiedergabe des Musters die Positionen der Randbildbereiche aufgerufen und die ihnen jeweils zugeordneten Musterstrukturen mit Daten ausgefüllt und abgebildet werden, die den Musterdaten der Musterstrukturen entsprechen.

Anhand des zunächst zwischengespeicherten Musters, dessen Musterdaten matrixförmig angeordneten Bildelementen zugeordnet sind, werden also nur die Positionen der Randbildbereiche von Musterstrukturen ermittelt und gespeichert, so daß die Speicherung des Musters erheblich weniger Speicherplatz erfordert als beim herkömmlichen Verfahren. Bei der Wiedergabe des Musters werden diese Randbildbereiche mit Hilfe der zentralen Steuereinrichtung wieder aufgerufen und positionsgetreu zwischengespeichert, so daß zwischen den Randbildbereichen liegende und den Musterstrukturen zugeordnete Bildbereiche mit Daten ausgefüllt und abgebildet werden können, die mit den Musterdaten der ursprünglichen Musterstrukturen übereinstimmen. Die Musterdaten der Musterstrukturen können beispielsweise so gewählt sein, daß auf einem Monitor die Musterstrukturen schwarz erscheinen, wäh rend die Musterdaten außerhalb der Musterstrukturen so gewählt sein können, daß dieser Bereich auf einem Monitor weiß erscheint.

Eine sehr vorteilhafte Weiterbildung der Erfindung zeichnet sich dadurch aus, daß zur Ermittlung äußerer Randbildbereiche die Musterdaten jeweils paarweise in Zeilen-oder Spaltenrichtung des Musters so lange fortlaufend miteinander verglichen werden, bis durch Differenzbildung zwischen zwei Musterdaten ein innerhalb einer Musterstruktur liegender Strukturbildbereich aufgrund eines Musterdatenunterschiedes vorbestimmter Größe erfaßt worden ist, die Position des vor diesem Strukturbildbereich liegenden Randbildbereichs gespeichert wird, ausgehend von diesem ersten Randbildbereich im oder entgegengesetzt zum Uhrzeigersinn und beginnend mit dem Strukturbildbereich, der zuletzt zum Vergleich herangezogen worden ist, die Musterdaten der angrenzenden Bild-bzw. Strukturbildbereiche und des ersten Randbildbereichs jeweils miteinander verglichen werden, bis ein zweiter Randbildbereich mit gleichem Datenwert wie der erste Randbildbereichs gespeichert wird, und daß ausgehend vom zweiten Randbildbereich der beschriebene Vergleich und die Speicherung der Positionen weiterer Randbildbereiche so lange fortgesetzt wird, bis der erste Randbildbereich wieder erreicht wird.

Die Randbildbereiche der Musterstrukturen lassen sich auf diese Weise sehr schnell ermitteln, indem nach Auffinden eines ersten Randbildbereichs einer Musterstruktur diese Musterstruktur praktisch umfahren wird. Dabei werden nacheinander verschiedene Randbildbereiche durch Vergleich ermittelt und gespeichert.

Nach einer anderen vorteilhaften Ausgestaltung der Erfindung wird nach erneutem Erreichen des ersten Randbildbereichs der paarweise Vergleich der Musterdaten entlang derselben Zeile bzw. Spalte unter Ausklammerung des Bereichs zwischen bekannten Positionen von Strukturbildbereichen fortgeführt, bis ein Strukturbildbereich einer neuen Musterstruktur erfaßt wird, wobei nach Abarbeitung der genannten Zeile bzw. Spalte der Vorgang für eine benachbarte Zeile bzw. Spalte entsprechend wiederholt wird.

Ist also nach Erfassung eines ersten Strukturbildbereichs eine erste Musterstruktur zur Ermittlung ihrer Randbildbereiche umfahren worden, und liegt diese erste Musterstruktur nicht am Zeilen- bzw. Spaltenende, so wird der Such-bzw. Abtastvorgang in derselben Zeile bzw. Spalte fortgesetzt, bis ein weiterer erster Strukturbildbereich einer anderen Musterstruktur aufgefunden worden ist. Diese wird zur Bestimmung ihrer Randbildbereiche wiederum umfahren, bis der weitere erste Randbildbereich wieder erreicht worden ist. Bei Abtastung einer benachbarten Zeile bzw. Spalte werden Strukturbildbereiche von bereits umfahrenen Strukturen unterdrückt, was möglich ist, da deren Positionen bereits bekannt sind. Auf diese Weise wird vermieden, daß Musterstrukturen mehrfach umfahren werden.

Nach einer vorteilhaften anderen Ausgestaltung der Erfindung wird im Bereich zwischen bekannten Positionen von äußeren Randbildbereichen entlang einer Zeile bzw. Spalte geprüft, ob alle Bildbereiche Strukturbildbereiche sind, wobei bei Vorhandensein wenigstens eines weiteren innerhalb dieses Bereichs liegenden Bildbereichs, der kein Strukturbildbereich ist, dieser weitere Bildbereich als erster Randbildbereich zur Ermittlung innerer Randbildbereiche herangezogen wird, und wobei nur diejenigen Bildbereiche mit Musterdaten ausgefüllt werden, die zwi schen den äußeren Randbildbereichen und den inneren Randbildbereichen liegen.

Hierdurch wird erreicht, daß innerhalb von Musterstrukturen liegende Bereiche, die keine Strukturbildbereiche sind, einwandfrei als solche erfaßt und reproduziert werden können. Geschlossene linienförmige Strukturen lassen sich daher genau wiedergeben, ohne daß ihr innerer Bereich bei der Wiedergabe ausgefüllt und beispielsweise, wie auch die Linien, auf einem Monitor schwarz erscheint.

Eine weitere und sehr vorteilhafte Verbesserung des erfindungsgemäßen Verfahrens besteht darin, daß die Positionsspeicherung der Randbildbereiche durch Speicherung der Koordinaten des ersten Randbildbereichs und einer Richtungsangabe über diejenige von acht Richtungen erfolgt, unter der der jeweils nächste Randbildbereich der an den vorhergehenden Randbildbereich angrenzenden acht Randbildbereiche liegt.

Bei matrixförmig angeordneten Bildbereichen liegen an jeweils einem Randbildbereich acht weitere Bildbereiche an, durch die Richtungen relativ zu dem genannten einen Randbildbereich definiert werden können. Diese acht Richtungen können mit acht verschiedenen Ziffern bezeichnet werden, so daß die Richtung vom ersten Randbildbereich zum nächsten Randbildbereich nur durch eine dieser acht Ziffern angegeben zu werden braucht. Es ist daher nicht mehr erforderlich, für alle Randbildbereiche jeweils Koordinatenpaare zu speichern, son-dern nur für den ersten. Die Positionen aller weiteren Randbildbereiche sind jeweils durch die genannten Richtungsangaben zum vorhergehenden Randbild bereich bestimmt. Eine Musterstruktur kann daher mit noch weniger Daten beschrieben werden, so daß sich dadurch der Speicherbe darf noch weiter verringert.

Nach einer anderen vorteilhaften Ausgestaltung der Erfindung kann zur Richtungsangabe ausgehend von der Richtung, unter der der zweite Randbildbereich zum ersten Randbildbereich liegt, diejenige Anzahl von Winkelintervallen zwischen den acht Richtungen bestimmt werden, die bei einem festgelegten Drehsinn von der alten Richtung zu der neuen Richtung zu durchlaufen sind.

Ändert sich die Richtung zwischen zwei aufei-nanderfolgenden Randbildbereichen, so wird ein-fach unter Berücksichtigung des genannten Drehsinnes abgezählt, wieviel weitere der insgesamt acht Richtungen noch zwischen diesen beiden genannten Richtungen liegen. Die entsprechende Winkelintervallanzahl wird dann zur Richtungsangabe verwendet, unter der der neue Randbildbereich relativ zum alten Randbildbereich liegt.

Vorteilhafterweise wird vorbestimmten Folgen von Winkelintervallanzahlen eine Bestimmungsgröße als Richtungsangabe zugeordnet. Hierdurch kann der Datenumfang zur Beschreibung einer Musterstruktur noch weiter verringert werden, so daß der Speicherbedarf zur Speicherung eines graphischen Musters bzw. einer Unterschrfit noch weiter herabgesetzt wird.

Beispielsweise wird zwei Folgen von gleichen Winkelintervallanzahlen eine Bestimmungsgröße zugeordnet. Zwei Folgen von gleichen Winkelinter-vallanzahlen treten relativ häufig auf, so daß es sinnvoll ist, die beiden Folgen durch nur eine einzige Bestimmungsgröße als Richtungsangabe zu beschreiben.

Die Musterdaten können vor der Ermittlung der Randbildbereiche gemittelt werden, beispielsweise dadurch, daß aus den Musterdaten von jeweils vier gegenseitig aneinander liegenden Bildbereichen ein Mittelwert gebildet wird. Hierdurch wird erreicht, daß ein rauschärmeres und schärferes Musterbild erhalten wird, das zur Bestimmung der Positionen der Randbildbereiche der Musterstrukturen herangezogen wird.

Vorteilhaft ist es ferner, die Musterdaten vor der Ermittlung der Randbildbereiche einer digitalen Filterung zu unterziehen, da auf diese Weise der Kontrast des Musterbildes verbessert und der Hintergrund normiert wird.

Nach einer anderen vorteilhaften Weiterbildung der Erfindung wird das gesamte Muster von Musterdaten, die den Musteruntergrund repräsentieren, eingerahmt. Sind beispielsweise die auf einem Monitor erscheinenden Musterstrukturen schwarz, so wird um das gesamte Muster ein weißer Bildrahmen gelegt. Durch diesen weißen Bildrahmen wird sichergestellt, daß Musterstrukturen zur Bestimmung der Randbildbereiche in jedem Fall vollständig umfahren werden können.

Vorteilhafterweise kann das graphische Muster bzw. die Unterschrift zur Erzeugung der Musterdaten optisch abgetastet und zwischengespeichert werden. Die Wiedergabe des Musters kann mittels eines Laserstrahles auf einem strahlungsempfindlichen Aufzeichnungsträger oder mittels einer geeigneten Druckvorrichtung erfolgen.

Die Vorrichtung zur Durchführung des Verfahrens besitzt eine Eingabevorrichtung zur Aufnahme eines Musters in digitaler Form, eine Speichereinrichtung zur Speicherung von Musterdaten des Musters, eine zentrale Steuereinrichtung zum Aufrufen der Musterdaten aus der Speichereinrichtung sowie eine Wiedergabeeinrichtung zur Wiedergabe des Musters, wobei die Steuereinrichtung eine Re chenstufe zur Berechnung der Randbildbereichspositionen der Musterstrukturen enthält und mit einer weiteren Speichereinrichtung verbunden ist, in der nur die Randbildbereichspositionen oder aus diesen abgeleitete Positionsdaten speicherbar sind.

Die Zeichnung stellt ein Ausführungsbeispiel der Erfindung dar. Es zeigen:

Fig. 1 ein in einem Bildspeicher mit matrixförmig angeordneten Bildelementen gespeichertes Muster M, das zwei Musterstrukturen $M_1$ und $M'_1$ besitzt,

Fig. 2 eine graphische Darstellung zur Definition von acht Richtungen, unter denen jeweils acht an ein Bildelement angrenzende Bildelemente liegen,

Fig. 3 einen Teil der Musterstruktur $M_1$ nach Fig. 1 zur Erläuterung der Bestimmung ihrer Randbildbereiche,

Fig. 4 eine im Bildspeicher zwischengespeicherte ringförmige Musterstruktur $M_2$, und

Fig. 5 eine geeignete Vorrichtung zur Speicherung und Wiedergabe von Musterstrukturen bzw. Unterschriften.

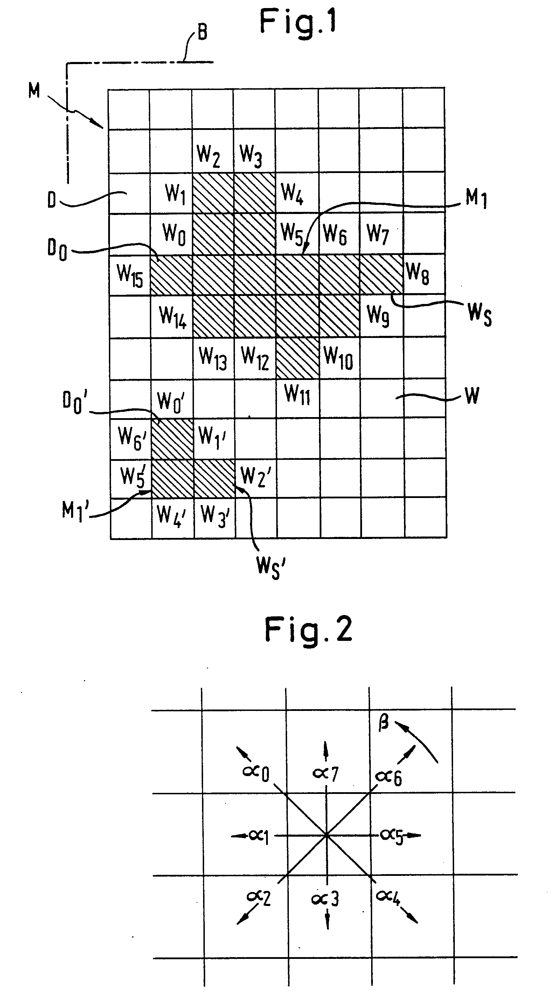

Die Fig. 1 zeigt einen Ausschnitt aus einem Bildspeicher B mit matrixförmig angeordneten Bildbereichen bzw. Bildelementen, denen Musterdaten D, $D_0$ und $D'_0$ zugeordnet sind. Das im Bildspeicher B gespeicherte Muster M besitzt zwei Musterstrukturen $M_1$ und $M'_1$, die durch Musterdaten $D_0$ und $D'_0$ beschrieben sind. Die den Musterstrukturen $M_1$ und $M'_1$ zugeordneten Bildbereiche werden nachfolgend als Strukturbildbereiche $W_S$ und $W'_S$ bezeichnet, während die außerhalb der Musterstrukturen $M_1$ und $M'_1$ liegenden Bildbereiche mit W bezeichnet werden.

Die Musterstruktur $M_1$ wird vollständig durch ihre Randbildbereiche $W_0$, ..., $W_{15}$ und die Musterdaten $D_0$ beschrieben, während die Musterstrukturen $M'_1$ durch ihre Randbildbereiche $W'_0$, ..., $W'_6$ und ihre Musterdaten $D'_0$ beschrieben wird. Die Musterdaten $D_0$ und $D'_0$ besitzen einen solchen Wert, daß beispielsweise die entsprechenden Musterstrukturen $M_1$ und $M'_1$ auf einem Monitor - schwarz erscheinen, während die Musterdaten D der außerhalb der Musterstrukturen $M_1$ und $M'_1$ liegenden Bildbereiche W Werte besitzen, die den außerhalb der Musterstrukturen liegenden Bereich auf dem Monitor weiß erscheinen lassen. Selbstverständlich können die schwarzen und die weißen Bereiche innerhalb des Musters M auch vertauscht sein.

Im nachfolgenden wird anhand der Fig. 1 bis 3 näher erläutert, wie die Randbildbereiche $W_0$, $W_1$, ..., $W_{15}$ und $W'_0$, $W'_1$, ..., $W'_6$ der Musterstrukturen $M_1$ und $M'_1$ bestimmt werden. Es sei darauf hingewiesen, daß vor einer solchen Bestimmung die Musterdaten des im Bildspeicher B gespeicherten Musters M einer geeigneten Mittelwertbildung unterzogen werden können, um beispielsweise ein rauschärmeres und schärferes Muster M zu gewinnen. Zur Kontrastverbesserung und Hintergrundnormierung des Musters kann dieses weiterhin einer digitalen Filterung unterzogen werden, so daß insbesondere im Bereich der Kanten eine Kontrastverstärkung auftritt.

Das im Bildspeicher B gespeicherte Muster M, das beispielsweise eine Unterschrift oder dergleichen darstellt, und durch optische Abtastung und Digitalisierung der Bilddaten in den Bildspeicher B übertragen worden ist, kann spalten-oder zeilensweise abgetastet werden. Im folgenden sei angenommen, daß die Abtastung spaltenweise erfolgt. Wie zu erkennen ist, erstreckt sich keines der beiden Muster $M_1$ und $M'_1$ in die erste und am linken Rand des Bildspeichers B vertikal verlaufende Spalte, so daß bei Abtastung dieser ersten Spalte kein Strukturbildbereich $W_S$ erfaßt werden kann. Erst bei Abtastung der zweiten Spalte wird ein Struktur bildbereich $W_S$ detektiert, der in der fünften Zeile von oben liegt. Die Abtastung erfolgt dabei entlang der jeweiligen Spalten von oben nach unten in Fig. 1. Sie geschieht dadurch, daß die Musterdaten jeweils zweier benachbarter und in Spaltenrichtung liegender Bildelemente miteinander verglichen werden. Erreicht die Differenz zwischen beiden miteinander verglichenen Bildelementen einen vorbestimmten Wert, so wird angenommen, daß es sich bei dem letzten Bildbereich um einen Strukturbildbereich $W_S$ handelt. Der in Abtastrich-

tung vor diesem Strukturbildbereich $W_S$ liegende Bildbereich wird als erster Randbildbereich $W_o$ definiert. Seine Koordinaten werden nachfolgend gespeichert. Zur Ermittlung der Lage des zweiten Randbildbereichs $W_1$ werden die Musterdaten $D$, $D_o$ von erstem Randbildbereich $W_o$ und ihn direkt umgebenden weiteren Bildbereichen miteinander verglichen. Der Vergleich beginnt dabei mit demjenigen Strukturbildbereich $W_S$, der zuletzt zu einem Vergleich herangezogen worden ist, in diesem Falle also mit dem Strukturbildbereich $W_S$, der sich unterhalb des ersten Randbildbereichs $W_o$ befindet. Dieser Strukturbildbereich $W_S$ liegt relativ zum ersten Randbildbereich $W_o$ unter einer Richtung $\alpha_3$, wie an Hand der Fig. 2 zu erkennen ist. Die anderen an den ersten Randbildbereich $W_o$ angrenzenden Bildbereiche liegen dabei, in Drehrichtung $\beta$ gesehen, unter den Winkeln $\alpha_4$, $\alpha_5$, $\alpha_6$, $\alpha_7$, $\alpha_0$, $\alpha_1$, und $\alpha_2$ relativ zum ersten Randbildbereich $W_o$. Insgesamt wird er von acht Bildbereichen umgeben, die in acht verschiedenen Richtungen liegen.

Der genannte Vergleich der Musterdaten zwischen erstem Randbildbereich $W_o$ und ihn umgebenden Bildbereichen wird in Drehrichtung $\beta$ (entgegen der Uhrzeigerrichtung) solange fortgesetzt, bis festgestellt wird, daß gleiche Musterdaten $D$, $D_o$ zwischen den genannten Bildbereichen vorliegen. In diesem Fall wird also als nächstes der Randbildbereich $W_1$ aufgefunden, dessen Koordinaten ebenfalls gespeichert werden. Ausgehend von diesem zweiten Randbildbereich $W_1$ wird der zuvor genannte Vergleich wiederholt, und zwar beginnend mit dem Strukturbildbereich $W_S$, der in der dritten Zeile von oben und in der dritten Spalte von links im Bildspeicher B liegt. Gleichheit zwischen den Musterdaten wird als erstes in Drehrichtung $\beta$ erreicht, wenn der Bereich $W_2$ mit dem zweiten Randbildbereich $W_1$ verglichen wird. Die Koordinaten des Bildbereichs $W_2$ werden daher ebenfalls gespeichert. Er stellt den dritten Randbildbereich dar. Durch Fortsetzung dieses Abtastverfahrens wird die Musterstruktur $M_1$ umfahren, so daß nachfolgend auch die Koordinaten der weiteren Randbildbereiche $W_3$, $W_4$, $W_5$, ..., $W_{15}$ ermittelt und gespeichert werden können. Wird anschließend der erste Randbildbereich $W_o$ wieder erreicht, wird der genannte Vergleich beendet.

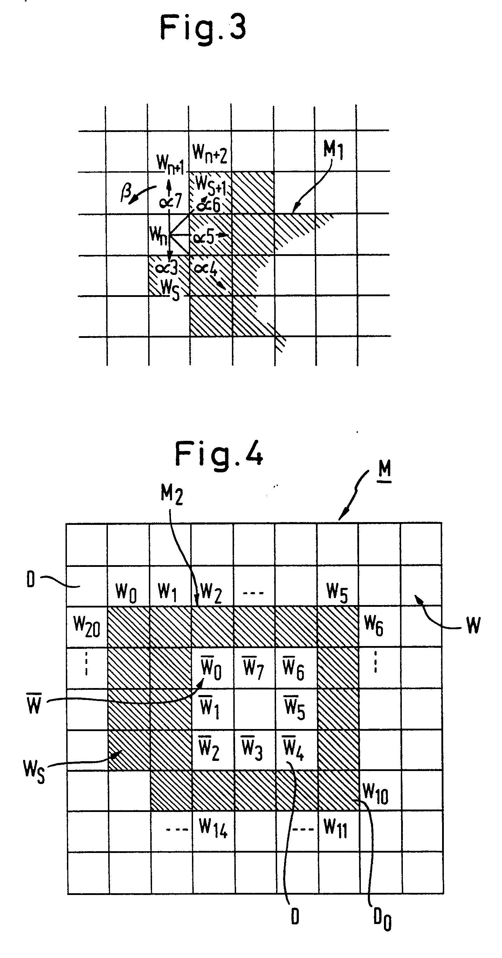

Die Fig. 3 zeigt nochmals das Prinzip der genannten Abtastung zur Ermittlung der Randbildbereiche in allgemeinerer Darstellung. Ausgehend von einem Bildbereich $W_n$ (erster Randbildbereich, dessen Koordinaten gespeichert sind) erfolgt ein Bilddatenvergleich zwischen diesem und dem darunter liegenden Strukturbildbereich $W_S$ in Richtung $\alpha_3$, der zuletzt zu einem Vergleich herangezogen worden ist. Entsprechende Vergleiche erfolgen mit den Strukurbildbereichen in Richtung $\alpha_4$, $_5$, und $\alpha_6$,

sowie mit dem weiteren Bildbereich in Richtung $\alpha_7$, wenn die Drehung in Richtung $\beta$ erfolgt. Selbstverständlich könnte ein Vergleich auch in entgegengesetzter Richtung erfolgen. Sie muß nur bei einem Umlauf einer Musterstruktur konstant bleiben. Wird bei einem Vergleiche der Bilddaten der Bildbereiche $W_n$ und $W_{n+1}$ festgestellt, daß sie übereinstimmen, so wird der Bildbereich $W_{n+1}$ als zweiter Randbildbereich definiert, dessen Koordinaten ebenfalls gespeichert werden. Ein entsprechender Vergleich der Bilddaten beginnt jetzt mit den Bereichen $W_{n+1}$ und $W_{s+1}$. In Richtung $\beta$ gesehen wird nachfolgend also der Bildbereich $W_{n+2}$ erhalten, der ein dritter Randbildbereich ist, dessen Koordinaten ebenfalls gespeichert werden, und so weiter.

Wird der erste Randbildbereich $W_o$ nach Umfahren der Musterstruktur $M_1$ wieder erreicht, so wird die genannte Abtastung in Spaltenrichtung nach unten in Fig. 1 fortgesetzt. Dabei wird der Bereich zwischen den bekannten Randbildbereichen $W_o$ und $W_{14}$ ausgeklammert. Durch weiteren Vergleich der Musterdaten $D$ und $D'_o$ wird ein folgender Strukturbildbereich $W'_S$ einer nächsten Musterstruktur $M'_1$ detektiert. Der in Abtastrichtung vor diesem Strukturbildbereich $W'_S$ liegende Bildbereich wird wiederum als erster Randbildbereich $W'_o$ für die zweite Musterstruktur $M'_1$ angesehen. Seine Koordinaten werden gespeichert. Nachfolgend wird die zweite Musterstruktur $M'_1$ zur Ermittlung ihrer weiteren Randbildbereiche $W'_1$, $W'_2$, ..., $W'_6$ umfahren, wobei ein entsprechender Vergleich wie bei der Musterstruktur $M_1$ vorgenommen wird. Auch die Koordinaten dieser weiteren Randbildbereiche $W'_1$, ..., $W'_6$ werden gespeichert.

Nach Beendigung der Abtastung der zweiten Spalte wird nachfolgend die dritte Spalte von links in Fig. 1 von oben nach unten abgetastet, wobei wiederum die Bereiche zwischen bekannten Randbildbereichen $W_2$-$W_{13}$ und $W'_1$-$W'_3$ ausgeklammert werden, um eine erneute Umfahrung der Musterstrukturen $M_1$ und $M'_1$ zu vermeiden. Dieses Verfahren wird so lange fortgesetzt, bis alle Spalten abgetastet worden sind. Selbstverständlich können die Spalten auch in entgegengesetzter Richtung abgetastet werden.

Um festzustellen, ob es sich bei den genannten Musterstrukturen $M_1$ und $M'_1$ um solche handelt, die nicht ganz ausgefüllt sind und einen freien Bereich einschließen, wie in Fig. 4 dargestellt, wird im Bereich zwischen bekannten Positionen von äußeren Randbildbereichen (z. B. zwischen den Randbildbereichen $W_2$ und $W_{14}$ in Fig. 4) geprüft, ob alle Bildbereiche Strukturbildbereiche $W_S$ sind. Die Überprüfung erfolgt ebenfalls durch paarweisen Vergleich der Bilddaten jeweils in Spaltenrichtung benachbarter Bildbereich bzw. durch Differenzbildung der entsprechenden Bilddaten. Bei Vorhandensein wenigstens eines weiteren innerhalb dieses Bereichs liegenden Bildbereiches $\overline{w}$ , der kein Strukturbildbereich ist, wird dieser weitere Bildbereich $\overline{w}$ als erster Randbildbereich zur Ermittlung innerer Randbildbereiche herangezogen. Diese Randbildbereiche sind in Fig. 4 mit $\overline{w}_0, \overline{w}_1, ..., \overline{w}_7$ bezeichnet. Die Koordinaten der inneren Randbildbereiche werden ebenso bestimmt wie die Koordinaten der äußeren Randbildbereiche der Musterstrukturen $M_1$ und $M'_1$, wie an Hand der Figuren 1 bis 3 beschrieben. Auch sie werden separat gespeichert.

Sind nach vollständiger Abtastung des Musters alle äußeren und inneren Randbildbereiche bestimmt und gespeichert worden, so kann das Muster selbst im Bildspeicher B gelöscht oder durch ein neues Muster überschrieben werden. Soll das zuvor gespeicherte Muster rekonstruiert werden, so werden mit Hilfe einer Steuereinrichtung nur die separat gespeicherten äußeren und inneren Randbildbereiche aufgerufen, so daß die Bereiche zwischen den äußeren und gegebenenfalls inneren Randbildbereichen mit Daten ausgefüllt werden können, die den ursprünglichen Musterdaten $D_0$, $D'_0$ der Musterstrukturen $M_1$, $M'_1$ und $M_2$ entsprechen. Das Ausfüllen der genannten Bereiche an Hand der äußeren und inneren Randbildbereiche erfolgt nach üblichen Verfahren, die hier nicht mehr beschrieben werden sollen, und die dem Durchschnittsfachmann geläufig sind.

Wie bereits erwähnt, können die äußeren Randbildbereiche $W_0$, ..., $W_{15}$; $W'_0$, ..., $W'_6$, $W_0$, ..., $W_{20}$ und die inneren Randbildbereiche $\overline{w}_0, ..., \overline{w}_7$ durch Speicherung ihrer Koordinaten festgehalten werden. Beispielsweise sind zur Speicherung der Randbildbereiche $W_0$, ..., $W_{15}$ der Musterstruktur $M_1$ in Fig. 1 sechzehn Koordinatenpaare zu speichern, was einen Speicherbedarf von 32 Byte (= 64) Halbbyte) bedeutet. Durch Verwendung der in Fig. 2 dargestellten acht Grundvektoren bzw. Richtungen kann der benötigte Speicherplatz zur Speicherung der genannten Randbildbereiche $W_0$, ..., $W_{15}$ verringert werden. Beispielsweise werden nur die Koordinaten (02,04) des ersten Randbildbereichs $W_0$ gespeichert, während für alle nachfolgenden Randbildbereiche $W_1$, $W_2$, $W_3$, ..., $W_{15}$ nur noch Richtungsangaben gegenüber dem jeweils unmittelbar vorausgehenden Randbildbereich gespeichert werden. Der Rand der Musterstruktur $M_1$ läßt sich also durch das Koordinatenpaar (02,04) für $W_0$ und 15 Grundvektoren 7 6 5 4 3 5 5 4 2 2 2 0 1 0 0 vollständig beschreiben, die den jeweiligen Richtungen $\alpha_0$ bis $\alpha_7$ zugeordnet sind. Beispielsweise liegt der zweite Randbildbereich $W_1$ der Musterstruktur $M_1$ relativ zum ersten Randbildbereich $W_0$ unter einer Richtung $\alpha_7$, so daß diese Richtung $\alpha_7$ durch einen Grundvektor 7 beschrieben werden kann. Den äußeren Randbildbereichen $W_4$ und $W_5$ wäre demnach ein Grundvektor 3 entsprechend der Richtung $\alpha_3$ zuzuordnen, unter dem der Randbildbereich $W_5$ zum Randbildbereich $W_4$ liegt, usw.

Die genannten Richtung bzw. Grundvektoren können auch in Rotationen oder Winkelintervallanzahlen übersetzt werden, die zwischen den genannten Richtungen liegen. Wie bereits erwähnt, liegt der zweite Randbildbereich $W_1$ relativ zum ersten Randbildbereich $W_0$ unter einer Richtung $\alpha_7$, so daß diesem Randbildbereichspaar der Grundvektor 7 zugeordnet ist. Um von der Richtung $\alpha_7$ zur nächstfolgenden Richtung $\alpha_6$ zu gelangen, unter der der dritte Randbildbereich $W_2$ relativ zum zweiten Randbildbereich $W_1$ liegt, müssen bei Berücksichtigung der Drehrichtung $\beta$ in Fig. 2 sieben Winkelintervalle durchlaufen werden. Diese Winkelintervallanzahl kann ebenfalls zur Beschreibung der Lage der Randbildbereiche herangezogen werden. Um nachfolgend zum vierten Randbildbereich $W_3$ zu gelangen, der unter einer Richtung $\alpha_5$ relativ zum dritten Randbildbereich $W_2$ liegt, müssen gegenüber der ursprünglichen Richtung zwischen $W_1$ und $W_2$ ebenfalls sieben Winkelintervalle in Richtung $\beta$ in Fig. 2 zurückgelegt werden, usw. Demzufolge kann der Rand der Musterstruktur $M_1$ durch das Koordinatenpaar (02,04) für den ersten Randbildbereich $W_0$, den Vektor 7 zwischen dem ersten Randbildbereich $W_0$ und dem zweiten Randbildbereich $W_1$ und die nachfolgenden Rotationen bzw. Winkelintervallanzahlen 7 7 7 2 0 7 6 0 0 6 1 7 0 vollständig beschrieben werden. Durch die nachfolgend angegebene Kompressionstabelle

| Halbbyte | Rotationsfolge bzw. Folge von Winkelintervall- anzahlen |
|---|---|
| 0 | 0 |
| 1 | 1 |
| 2 | 2 |
| 3 | 3 |
| 4 | 4 |
| 5 | 5 |
| 6 | 6 |
| 7 | 7 |
| 8 | 0 – 0 |
| 9 | 0 – 7 |
| 10 | 0 – 1 |
| 11 | 7 – 0 |
| 12 | 1 – 0 |
| 13 | 1 – 1 |
| 14 | 7 – 7 |
| 15 | 0 – 0 – 0 |

reduziert sich die Beschreibung weiter auf die Koordinatenangabe (02,04) für $W_0$, die Angabe des ersten Grundvektors 7 für die Richtung, unter der $W_1$ zu $W_0$ liegt, und auf die Angabe der Rotationsfolgen bzw. Folgen von Wineklintervallanzahlen 14 14 2 9 6 8 6 1 7 11. Es wird daher ein noch kleinerer Speicherumfang zur Speicherung derjenigen Daten benötigt, durch die die Musterstruktur $M_1$ vollständig beschrieben wird. Entsprechendes gilt für die anderen Musterstrukturen $M'_1$ und $M_2$. Die genannten Rotationen können durch Addition Modulo 8 erzeugt werden.

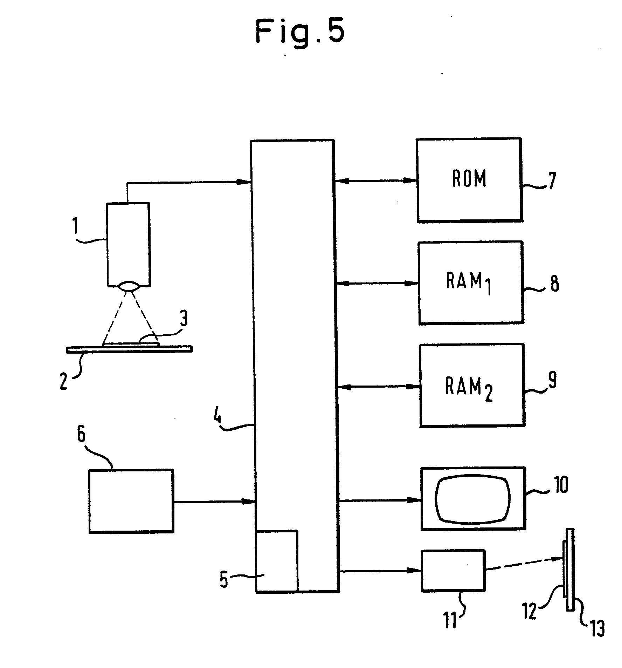

In der Fig. 5 ist eine Vorrichtung zur Durchführung des an Hand der Fig. 1 bis 4 beschriebenen Verfahrens dargestellt. Diese Vorrichtung besitzt eine optische Eingabeeinrichtung 1 zur Abtastung eines auf einem Dokumentenaufnahmetisch 2 liegenden Dokuments 3, das eine Unterschrift oder ein graphisches Muster trägt. Die optische Eingabeeinrichtung 1 wandelt das Bild des Musters bzw. der Unterschrift in digitale Signale um und leitet diese Signale zu einer zentralen Steuereinrichtung 4, die eine Rechenstufe 5 enthält. Die zentrale Steuereinrichtung 4 kann darüber hinaus noch mit anderen Eingabeeinrichtungen 6 verbunden sein, beispielsweise mit einer Schreibplatte durch die eine Unterschrift bei Druckbeaufschlagung in entsprechende elektrische Signale umgewandelt wird. Mit der zentralen Steuereinrichtung 4 sind ferner ein Nurlesespeicher 7 - (ROM) zur Speicherung von Betriebsprogrammen, ein erster Speicher 8 mit wahlfreiem Zugriff - ($RAM_1$), ein zweiter Speicher 9 mit wahlfreiem Zugriff ($RAM_2$) und mehrere Wiedergabeeinrichtungen 10 und 11 verbunden. Eine Wiedergabeeinrichtung kann beispielsweise aus einem Monitor 10 oder einem Laserdrucker 11 bestehen, der ein der eingegebenen Unterschrift entsprechendes Muster auf einem lichtempfindlichen Aufzeichnungsträger 12 erzeugt, der auf einer Unterlage 13 angeordnet ist. Der Speicher 8 ($RAM_1$) dient zur vorübergehenden Speicherung eines mit Hilfe der Eingabeeinrichtung 1 bzw. 6 aufgenommenen graphischen Musters, so daß die genannten äußeren und inneren Randbildbereiche dieses Musters bestimmt werden können. Die Randbildbereiche selbst bzw. ihre Koordinaten werden im zweiten Speicher 9 ($RAM_2$) gespeichert. Anschließend kann ein neues Muster in den Speicher 8 eingespeichert werden, wobei das alte Muster gelöscht bzw. überschrieben wird. Die entsprechenden neuen Randbildbereiche werden ebenfalls im Speicher 9 gespeichert, ohne daß jedoch die Randbildbereiche des vorhergehenden Musters gelöscht werden. Insgesamt braucht der Speicher 8 nur eine Speicherkapazität zu besitzen, die zur Speicherung eines einzigen Musters ausreicht. Er kann daher relativ klein sein. Die Speicherkapazität des Speichers 2 ist dagegen erheblich größer, da in ihm eine Vielzahl von verschiedenen Mustern zugeordneten Randbildbereichen gespeichert werden sollen. Mit Hilfe der zentralen Steuereinrichtung 4 können die im Speicher 9 gespeicherten Randbildbereiche eines Musters aufgerufen und im Speicher 8 die zugeordneten Musterstrukturen $M_1$, $M'_1$ und $M_2$ nach gängigen Methoden rekonstruiert werden. Die rekonstruierten Musterstrukturen werden dann aus dem Speicher 8 ausgelesen und dem Monitor 10 oder dem Laserdrucker 11 zugeführt.

## Ansprüche

1. Verfahren zur elektronischen Speicherung und Wiedergabe von graphischen Mustern, insbesondere von Schriftzügen, bei dem ein graphisches Muster mit Hilfe einer Eingabeeinrichtung in einem Bildspeicher in Form von Musterdaten gespeichert wird, die matrixförmig angeordneten Bildbereichen zugeordnet sind, und die mittels einer zentralen Steuereinrichtung aus dem Bildspeicher abgerufen und einer Wiedergabeeinrichtung zugeführt werden,

**dadurch gekennzeichnet,** daß

-die Musterdaten (D, $D_0$, $D'_0$) des Musters (M) zwischengespeichert werden,

-anhand der zwischengespeicherten Musterdaten - (D, $D_0$, $D'_0$) nur die Positionen von Randbildbereichen ($W_0$, ..., $W_{15}$; $W'_0$, ..., $W'_6$) ermittelt und gespeichert werden, die unmittelbar am und entlang des gesamten Randes von jeweils zum Muster (M) gehörenden Musterstrukturen ($M_1$, $M'_1$) liegen, und daß

-zur Wiedergabe des Musters (M) die Positionen der Randbildbereiche ($W_0$, ..., $W_{15}$ ; $W'_0$, ..., $W'_6$) aufgerufen und die ihnen jeweils zugeordneten Musterstrukturen ($M_1$, $M'_1$) mit Daten ausgefüllt und abgebildet werden, die den Musterdaten ($D_0$, $D'_0$) der Musterstrukturen ($M_1$, $M'_1$) entsprechen.

2. Verfahren nach Anspruch 1, **dadurch gekennzeichnet,** daß zur Ermittlung äußerer Randbildbereiche ($W_0$, ..., $W_{15}$; $W'_0$, ..., $W'_6$) die Musterdaten (D, $D_0$, $D'_0$) jeweils paarweise in Zeilen-oder Spaltenrichtung des Musters (M) solange fortlaufend miteinander verglichen werden, bis durch Differenzbildung zwischen zwei Musterdaten ein innerhalb einer Musterstruktur ($M_1$, $M'_1$) liegender Strukturbildbereich ($W_S$, $W'_S$ ) aufgrund eines Musterdatenunterschiedes vorbestimmter Größe erfaßt worden ist, die Position des vor diesem Strukturbildbereich liegenden Randbildbereichs - ($W_0$, $W'_0$) gespeichert wird, ausgehend von diesem ersten Randbildbereich ($W_0$, $W'_0$) im oder entgegengesetzt zum Uhrzeigersinn und beginnend mit dem Strukturbildbereich, der zuletzt zum Vergleich herangezogen worden ist, die Musterdaten der angrenzenden Bild-bzw. Strukturbildbereiche und des ersten Randbildbereichs jeweils miteinander verglichen werden, bis ein zweiter Randbildbereich ($W_1$, $W'_1$) mit gleichem Datenwert wie der erste Randbildbereich ($W_0$, $W'_0$) erfaßt wird, die Position des zweiten Randbildbereichs gespeichert wird, und daß ausgehend vom zweiten Randbildbereich ($W_1$, $W'_1$) der beschriebene Vergleich und die Speicherung der Positionen weiterer Randbildbereiche solange fortgesetzt wird, bis der erste Randbildbereich ($W_0$, $W'_0$) wieder erreicht wird.

3. Verfahren nach Anspruch 2, **dadurch gekennzeichnet,** daß nach erneutem Erreichen des ersten Randbildbereichs ($W_0$) der paarweise Vergleich der Musterdaten entlang derselben Zeile bzw. Spalte unter Ausklammerung des Bereichs zwischen bekannten Positionen von Strukturbildbereichen fortgeführt wird, bis ein Strukturbildbereich ($W'_S$) einer neuen Musterstruktur ($M'_1$) erfaßt wird, und daß nach Abarbeitung der genannten Zeile bzw. Spalte der Vorgang für eine benachbarte Zeile bzw. Spalte entsprechend wiederholt wird.

4. Verfahren nach Anspruch 3, **dadurch gekennzeichnet,** daß im Bereich zwischen bekannten Positionen von äußeren Randbildbereichen entlang einer Zeile bzw. Spalte geprüft wird, ob alle Bildbereiche (W) Strukturbildbereiche ($W_S$ ) sind, daß bei Vorhandensein wenigstens eines weiteren innerhalb dieses Bereichs liegenden Bildbereiches ($\overline{W}$ ), der kein Strukturbildbereich ($W_S$) ist, dieser weitere Bildbereich ($\overline{W}$ ) als erster Randbildbereich zur Ermittlung von inneren Randbildbereichen ($\overline{w}_0$, ..., $\overline{w}_7$) herangezogen wird, und daß nur diejenigen Bildbereiche mit Musterdaten ($D_0$) ausgefüllt werden, die zwischen den äußeren Randbildbereichen ($W_0$, ..., $W_{20}$) und den inneren Randbildbereichen - ($\overline{w}_0$, ..., $\overline{w}_7$) liegen.

5. Verfahren nach Anspruch 2, 3 oder 4, **dadurch gekennzeichnet,** daß die Positionsspeicherung der Randbildbereiche ($W_0$, ..., $W_{15}$; $W'_0$, ..., $W'_6$; $\overline{W}_0$, ..., $\overline{W}_{20}$) durch Speicherung der Koordinaten (x,y) des ersten Randbildbereichs ($W_0$, $W'_0$, $\overline{W}_0$) und einer Richtungsangabe (0,1,2,...,7) über diejenige von acht Richtungen ($\alpha_0$, $\alpha_1$, $\alpha_2$..., $\alpha_7$) er-

folgt, unter der der jeweils nächste Randbildbereich der an den vor hergehenden Randbildbereich angrenzenden acht Bildbereiche liegt.

6. Verfahren nach Anspruch 5, **dadurch gekennzeichnet,** daß zur Richtungsangabe ausgehend von der Richtung ($\alpha_7$), unter dem der zweite Randbildbereich zum ersten Randbildbereich liegt, diejenige Anzahl von Winkelintervallen zwischen den acht Richtungen bestimmt wird, die bei einem festgelegten Drehsinn ($\beta$) von der alten Richtung zu der neuen Richtung zu durchlaufen sind.

7. Verfahren nach Anspruch 6, **dadurch gekennzeichnet,** daß vorbestimmten Folgen von Winkelintervallanzahlen eine Bestimmungsgröße - ($\gamma$) als Richtungsangabe zugeordnet wird.

8. Verfahren nach Anspruch 7, **dadurch gekennzeichnet,** daß zwei Folgen von gleichen Winkelintervallanzahlen eine Bestimmungsgröße zugeordnet wird.

9. Verfahren nach einem der Ansprüche 1 bis 8, **dadurch gekennzeichnet,** daß die Musterdaten ($D$, $D_0$, $D'_0$) vor der Ermittlung der Randbildbereiche gemittelt werden.

10. Verfahren nach Anspruch 9, **dadurch gekennzeichnet,** daß aus den Musterdaten von jeweils vier gegenseitig aneinanderliegenden Bildbereichen ein Mittelwert gebildet wird.

11. Verfahren nach einem der Ansprüche 1 bis 10, **dadurch gekennzeichnet,** daß die Musterdaten vor der Ermittlung der Randbildbereiche einer digitalen Filterung unterzogen werden.

12. Verfahren nach einem der Ansprüche 1 bis 11, **dadurch gekennzeichnet,** daß das gesamte Muster (M) von Musterdaten, die den Musteruntergrund repräsentieren, eingerahmt wird.

13. Verfahren nach einem der Ansprüche 1 bis 12, **dadurch gekennzeichnet,** daß das graphische Muster (M) zur Erzeugung der Musterdaten - ($D$, $D_0$, $D'_0$) optisch abgetastet und zwischengespeichert wird.

14. Verfahren nach einem der Ansprüche 1 bis 13, **dadurch gekennzeichnet,** daß die Wiedergabe des Musters (M) mittels eines Laserstrahls auf einem strahlungsempfindlichen Aufzeichnungsträger erfolgt.

15. Verfahren nach einem der Ansprüche 1 bis 13, **dadurch gekennzeichnet,** daß die Wiedergabe des Musters durch Ausdrucken der Musterdaten erfolgt.

16. Vorrichtung zur Durchführung des Verfahrens nach Anspruch 1 oder einem der folgenden, mit einer Eingabeeinrichtung (1,6) zur Aufnahme eines Musters in digitaler Form, einer Speichereinrichtung (8) zur Speicherung von Musterdaten des Musters, einer zentralen Steuereinrichtung (4) zum Aufrufen der Musterdaten aus der Speichereinrichtung und einer Wiedergabeeinrichtung (10,11) zur Wiedergabe des Musters, **dadurch gekennzeichnet,** daß die Steuereinrichtung (4) eine Rechenstufe (5) zur Berechnung der Randbildbereichspositionen von Musterstrukturen ($M_1$, $M'_1$, $M_2$) enthält, und daß die Steuereinrichtung (4) mit einer weiteren Speichereinrichtung (9) verbunden ist, in der nur Randbildbereichspositionen oder aus diesen abgeleitete Positionsdaten speicherbar sind.

17. Vorrichtung nach Anspruch 16, **dadurch gekennzeichnet,** daß die Eingabeeinrichtung (1) eine optoelektronische Einrichtung ist.

18. Vorrichtung nach Anspruch 16, **dadurch gekennzeichnet,** daß die Wiedergaabeeinrichtung (11) in Form eines Laserdruckers ausgebildet ist.

# Fig.1

# Fig.2

# Fig.3

# Fig.4

Fig.5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | WESCON TECHNICAL PAPERS, Band 12, Teil 3, 20.-23. August 1968, Seite 8/3, 1-6, North Hollywood, US; W.F. SCHREIBER et al.: "Contour coding of images" * Seite 1, linke Spalte, Zeile 1 - Seite 2, linke Spalte, Zeile 19; Seite 2, rechte Spalte, Zeile 50 - Seite 3, linke Spalte, Zeile 21; Seite 4, linke Spalte, Zeile 30 - Seite 4, rechte Spalte, Zeile 3 * | 1 | H 04 N 1/413 G 06 F 15/68 |
| Y | Idem | 2-18 | |
| Y | COMPUTER VISION, GRAPHICS AND IMAGE PROCESSING, Band 30, Nr. 1, April 1985, Seiten 32-46, Academic Press Inc., New York, US; S. SUZUKI et al.: "Topological structural analysis of digitized binary images by border following" * Figur 1; Seiten 35,36 * | 2-8 | RECHERCHIERTE SACHGEBIETE (Int. Cl.4) H 04 N G 06 F |

--- -/-

Der vorliegende Recherchenbericht wurde für alle Patentansprüche erstellt.

| Recherchenort DEN HAAG | Abschlußdatum der Recherche 27-05-1986 | Prüfer SCHOENE, K.P. |
|---|---|---|

## EINSCHLÄGIGE DOKUMENTE

Seite 2

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | ELECTRONICS & COMMUNICATIONS IN JAPAN, Band 65-B, Nr. 7, Juli 1982, Seiten 46-54, Silver Spring, Maryland, US; H. TOMINAGA et al.: "Facsimile coding scheme using cornered edged point on contour line" * Figuren 3,11; Seite 47, linke Spalte, letzter Absatz - rechte Spalte, Absatz 2 * | 6-8 | |
| | --- | | |
| Y | EP-A-0 053 935 (NCR CANADA) * Seite 1 * | 9,10 | |
| | --- | | |
| Y | US-A-4 328 425 (STOFFEL) * Spalte 1, Zeilen 1-28 * | 11 | |
| | --- | | |
| Y | US-A-4 091 424 (WIDERGREN) * Figur 6; Spalte 2, Zeilen 23-27 * | 12,14, 15,18 | RECHERCHIERTE SACHGEBIETE (Int. Cl.4) |
| | --- | | |
| Y | FR-A-2 507 419 (CNRS) * Figuren 2-4 * | 13,16-18 | |
| | ----- | | |

Der vorliegende Recherchenbericht wurde für alle Patentansprüche erstellt.

| Recherchenort DEN HAAG | Abschlußdatum der Recherche 27-05-1986 | Prüfer SCHOENE, K.P. |
|---|---|---|